# EUROPEAN PATENT SPECIFICATION

(11) **EP 1 613 023 B1**
(45) Date of publication and mention of the grant of the patent: **29.08.2007**
(21) Application number: 04030972.6
(22) Date of filing: 29.12.2004
(51) Int. Cl.: H04L 29/12

(54) **Network bridge device and method for the network bridge device**
Netzwerkbrückeneinrichtung und Verfahren für die Netzwerkbrückeneinrichtung
Dispositif de pont de réseau et procédé pour le dispositif de pont de réseau

(30) Priority: 01.07.2004 JP 2004196015
(43) Date of publication of application: 04.01.2006
(60) Divisional application: 06016563.6
(73) Proprietor: FUJITSU LIMITED, Kawasaki-shi, Kanagawa 211-8588 (JP)
(72) Inventor: Sakamoto, Makoto, Kawasaki-shi Kanagawa 211-8588 (JP)
(74) Representative: Körfer, Thomas

(56) References cited:
- US-A1- 2002 062 485
- CISCO: "Configuring the DHCP Option 82 for Subscriber Identification" INTERNET CITATION, [Online] 6 December 2002 (2002-12-06), pages 1-7, XP002332896 Retrieved from the Internet: URL:http://www.cisco.com/univercd/cc/td/do c/product/lan/c3550/12112cea/3550scg/swdhc p82.htm> [retrieved on 2005-06-21]

## Description

### BACKGROUND OF THE INVENTION

### 1) Field of the Invention

The present invention relates to a network bridge device and a method for the network bridge device that prevent bandwidth saturation of a network due to the explosion or concentration of traffic, by reducing traffic at the bridge device between a local area network and a wide area network and that deletes management information when a host disconnection is detected.

### 2) Description of the Related Art

Data transmission networks that comply with the IEEE802.3 international standard, as represented by Ethernet (registered trademark), are increasingly used in many local area networks (LANs) as a native transport mechanism for higher-layer networks in terms of protocol, such as an internet protocol network (hereinafter, "IP network"). In recent years, telecommunication carriers are offering a network called "wide area Ethernet (registered trademark)" that seamlessly relays data from one LAN to another LAN via a wide area network (WAN), and the use of the network is increasing. At the same time, there is a trend towards an outsourcing of enterprise-level network management.

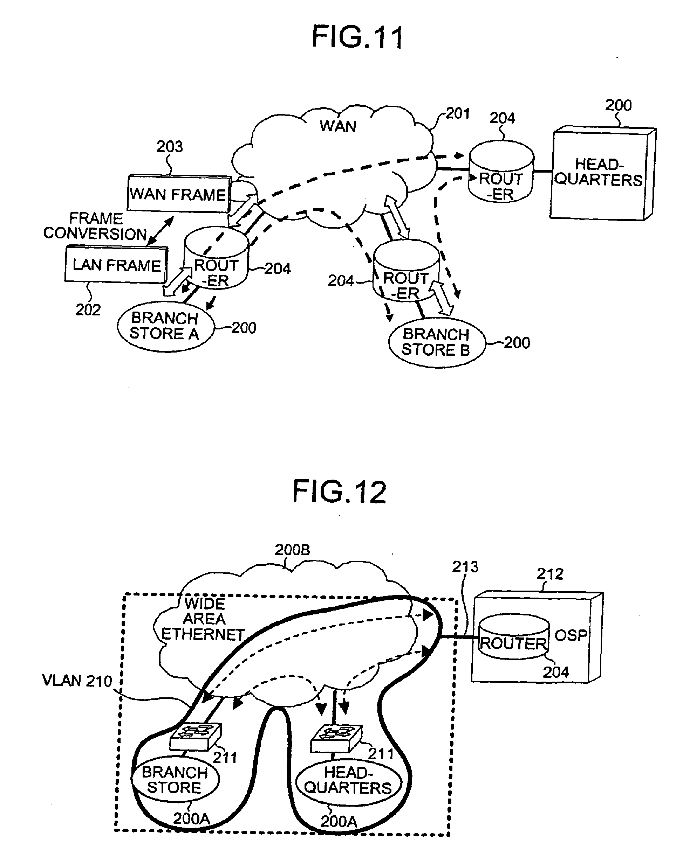

Fig. 11 is a schematic of the conventional IP network constructed by such as enterprises. The IP network includes a plurality of LANs 200 and a WAN 201. The LANs 200 comply with the IEEE802.3 standard. The WAN 201 connects each LAN 200 to enable communication between the LANs 200, by wide area telecommunication circuits that comply with telecommunications standards other than the IEEE802.3 standard, such as leased lines, frame relay, ATM.

In Fig. 11, the LANs 200 indicate networks of a branch store A, a branch store B, or a headquarters. Generally, the LANs 200 can be a network, or a plurality of networks connected to one another; whereas the WAN 201 includes, in almost all cases, the LANs 200 connected to one another. In conventional wide area telecommunication circuits, data is transmitted using a data link layer protocol other than the IEEE 802.3. Therefore, routers 204 are arranged as intermediary devices at a boundary between the LANs 200 and the WAN 201, and used to perform frame conversion between a LAN frame 202 and a WAN frame 203 (in other words, used to complete the transmission using the IEEE 802.3 once). However, when both of the LANs 200 and the WAN 201 comply with the IEEE802.3 standard, the routers 204 are not necessarily needed.

Fig. 12 is a schematic of the wide area Ethernet (registered trademark). In Fig. 12, LANs 200A and a WAN 200B form one virtual LAN (hereinafter, "VLAN") 210, and switch devices 211 replace the routers 204 (for example, see Japanese Patent Application Laid-Open No. 2003-169082). Address resolution and IP routing across the entire VLAN 210 are both controlled by a remotely-located network management apparatus (hereinafter, "OSP": Operation Service Provider) 212 that centrally controls the entire network (in contrast, the conventional IP network shown in Fig. 11 cannot be centrally controlled because address resolution is performed locally by each LAN 200 and IP routing is performed by each router 204 in the WAN 201). Thus, the outsourcing of network management of the LANs 200A becomes possible.

In realty, however, it is difficult for outsourcing service providers to centrally manage the configuration of each LAN 200A, because the IP network is originally designed to be a highly distributed system and has a high independency. In many cases, each LAN 200A in the wide area Ethernet (registered trademark) need to be managed by operators staffed to each LAN 200A, or to support facilities established nearby the LANs 200A by the provider for the client's account. This is a reason why the outsourcing of network management is not as cost-effective and widely-diffused as the outsourcing of operations of computers or computer applications. For this reason, in any case of Fig. 11 or Fig. 12, network management remains to be performed by the enterprises, without being outsourced.

On the other hand, the network shown in Fig. 11 has a problem of address resolution protocol (hereinafter, "ARP") broadcast storm. In Fig. 11, an ARP request is broadcast to all the LANs 200 via the WAN 201. Generally, a common-sense broadcast level for a private LAN of an enterprise is about 0.1 % of bandwidth. However, in a network with an extremely large number of LANs, for example 1,000 LANs, the bandwidth is saturated with ARP broadcast frames even if the LANs are symmetrical in terms of traffic. In many cases, however, the LANs are not symmetrical. More specifically, the traffic between one LAN and the headquarters can be a hundred times the traffic between another LAN and the headquarters. Therefore, the ARP broadcast frames from the former LAN causes the saturation of the bandwidth of the latter LAN.

In contrast, the ARP broadcast storm does not occur in the network shown in Fig. 12 because the OSP 212 performs IP routing (in other words, because the broadcast of ARP request is not necessary); conversely, a connection link 213 between the OSP 212 and the WAN 200B needs to have an extremely large capacity because all the traffic goes back and forth over the connection link 213 to pass through the OSP 212. In other words, the traffic scalability is virtually narrowed to the bandwidth of this link, while the original function of the switch devises 211 (i.e. distribution of the traffic) being undermined.

CISCO: "Configuring the DHCP option 82 for Subscriber Identification", 6.12.2002, XP 002332896 discloses a switch for reducing broadcast DHCP traffic.

### SUMMARY OF THE INVENTION

It is an object of the present invention to provide a network bridge according to claim 1 and a method for a network bridge according to claim 4.

### BRIEF DESCRIPTION OF THE DRAWINGS

Fig. 1 is an overall view of a network system configuration according to an embodiment of the present invention;
Fig. 2 is a schematic of a management table managed by an OSP 4 for address resolution;
Fig. 3 is a timing chart of management information registration involved in address assignment;
Fig. 4 is a flow chart of processing by CPEs 3A and 3B in address assignment;
Fig. 5 is a flow chart of processing by the OSP 4 in address assignment;
Fig. 6 is a timing chart of management information reference involved in address resolution;
Fig. 7 is a flow chart of processing by CPEs 3A and 3B in address resolution;
Fig. 8 is a flow chart of processing by the OSP 4 in address resolution;
Fig. 9 is a diagram of frame formats used;
Fig. 10 is a diagram for explaining an example;
Fig. 11 is a schematic of a conventional IP network;
Fig. 12 is a schematic of a wide area Ethernet (registered trademark);
Fig. 13 is a block diagram of the functional configuration of a network system ;
Fig. 14 is a block diagram of the functional configuration of a network system ; and
Fig. 15 is a block diagram of the functional configuration of the network system according to the present invention.

### DETAILED DESCRIPTION

Exemplary embodiments of a network bridge deviceand a method for the network bridge device according to the present invention are explained below in reference to the accompanying drawings.

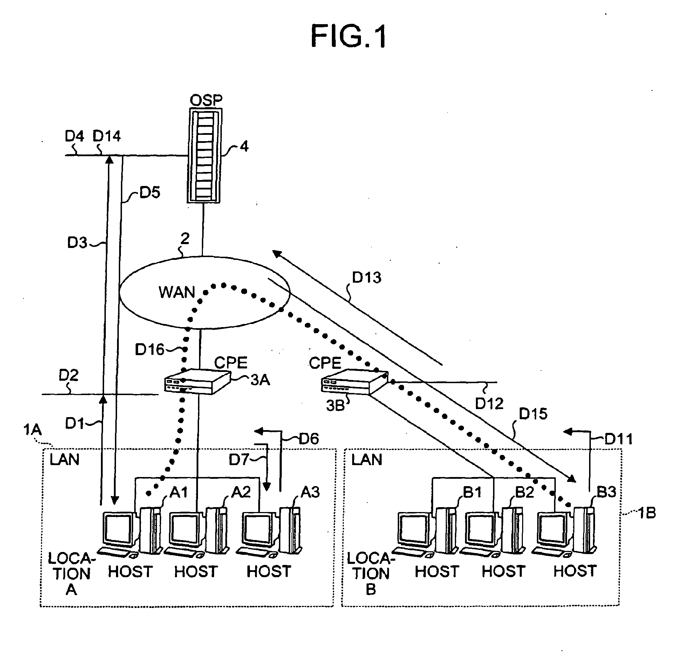

Fig. 1 is an overall view of a network system configuration according to an embodiment of the present invention. The network system shown in Fig. 1 includes a plurality of local area networks (LANs) 1A and 1B that comply with the IEEE802.3 standard; a wide area network (WAN) 2; a plurality of network bridge devices 3A and 3B (hereinafter, "CPE": Customer Premises Equipment) that function as gateways to connect the LANs 1A and 1B to the WAN 2; and a network management apparatus 4 (hereinafter, "OSP": Operation Service Provider) arranged at a network management center and centrally controls the entire network. The CPE 3A connects the LAN 1A to the WAN 2, and the CPE 3B connects the LAN 1B to the WAN 2. The OSP 4 is connected to the WAN 2 via a switch device (not shown).

In the conventional data transmission networks that comply with the IEEE802.3 standard, such as Ethernet (registered trademark), a destination address is usually resolved by broadcasting an address resolution request from one host (hereinafter, "address requiring host"), and sending a response to the request from another host (hereinafter, "address resolving host") to the address requiring host. In the present example however, the OSP 4 sends the response to the address requiring host on behalf of the address resolving host in collaboration with the CPEs 3A and 3B, when the address requiring host and the address resolving host are in different LANs 1A and 1B connected by the WAN 2. The OSP 4 functions as both a domain naming system (DNS) server and a dynamic host configuration protocol (DHCP) server to identify active hosts A1 to A3 and B1 to B3 in the LANs 1A and 1B. Information on each host (hereinafter, "management information") is registered in the OSP 4 through collaboration of the OSP 4 and the CPEs 3A and 3B.

The LANs 1A and 1B, the WAN 2, and the hosts A1 to A3 and B1 to B3 respectively have the same functions as those in the existing IP over Ethernet (registered trademark) network.

The function of the CPEs 3A and 3B is explained next. The CPEs 3A and 3B function as standard switch devices, and have their own MAC addresses. Furthermore, the CPEs 3A and 3B convert a broadcast frame into an unicast frame, or convert an unicast frame into a broadcast frame. More specifically;

### 1. Address Assignment Request and Response (DHCP)

When receiving a DHCP request from the LAN 1A or 1B, the CPE 3A or 3B unconditionally converts the request, which is a MAC broadcast frame, into a MAC unicast frame to the OSP 4 and sends the request to the WAN 2. There are many methods of converting the DHCP request into the MAC unicast frame, but in this embodiment, a destination address (DA) of the DHCP request is converted (overwritten) from "FF : FF : FF : FF : FF : FF" to the MAC address of the OSP 4.

On the other hand, when receiving a DHCP response to the DHCP request from the WAN 2, the CPE 3A or 3B converts the response, which is the MAC unicast frame, into the MAC broadcast frame and broadcasts the response to the LAN 1A or 1B.

### 2. Address Resolution Request and Response (ARP)

When receiving an ARP request from the LAN 1A or 1B, the CPE 3A or 3B determines whether the address requiring host and the address resolving host are in the same LAN 1A or 1B. When the two hosts are in the same LAN 1A or 1B, the CPE 3A or 3B does not perform any special action. On the other hand, when the two hosts are not in the same LAN 1A or 1B, the CPE 3A or 3B converts the request, which is the MAC broadcast frame, into the MAC unicast frame to the OSP 4 and sends the request to the WAN 2. There are many methods of converting the ARP request into the MAC unicast frame, but in this example the DA of the ARP request is converted (overwritten) from "FF : FF : FF : FF : FF : FF" to the MAC address of the OSP 4.

On the other hand, when receiving an ARP response to the ARP request from the WAN 2, the CPE 3A or 3B sends the response, which is the MAC unicast frame, to the address requiring host in the LAN 1A or 1B.

The function of the OSP 4 is explained next. The OSP 4 functions as the general-purpose DHCP server and the DNS server, and creates a management table explained below.

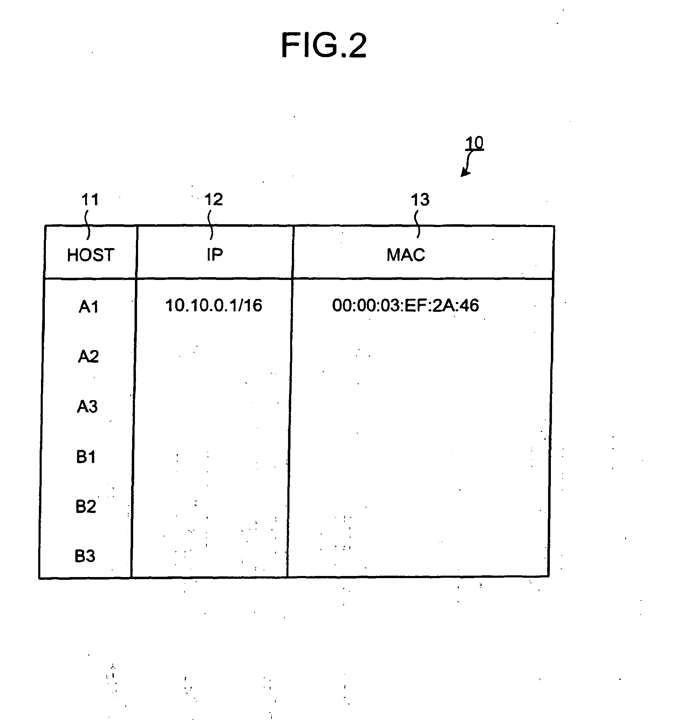

Fig. 2 is a schematic of a management table managed by the OSP 4 for address resolution. A management table 10 is a database and functions as a storage means that holds and maintains the management information necessary for the DHCP and the DNS. More specifically, at least a hostname 11, a first layer address 13 (hereinafter, "MAC address"), and a second layer address 12 (hereinafter, "IP address") of each of the hosts A1 to A3 and B1 to B3 are registered in the management table 10 of the OSP 4. The management information is registered to the management table 10 automatically and in an integrated manner, without changing the standard protocols of networks, such as the IP over Ethernet (registered trademark) network, that comply with the communication procedures prescribed by the IEEE802.3 standard.

Furthermore, the OSP 4 sends a special DHCP response to a special DHCP request that is unicast from the CPE 3A or 3B and addressed to the OSP 4. The OSP 4 also searches the management table 10 and sends a standard ARP response to a special ARP request that is unicast from the CPE 3A or 3B and addressed to the OSP 4. More specifically, the OSP 4 has the two functions described below.

### 1. Address Assignment

When receiving the DHCP request converted and unicast by the CPE 3A or 3B, the OSP 4 unicasts the special DHCP response to the CPE 3A or 3B, and the CPE 3A or 3B coverts the response to a standard DHCP response that is broadcast in the LAN 1A or 1B. At the same time, the OSP 4 adds to the management table 10 a record that includes the hostname, the IP address, and the MAC address of the host that has broadcast the DHCP request in the LAN 1A or 1B.

### 2. Address Resolution

When receiving the ARP request converted and unicast by the CPE 3A or 3B, the OSP 4 sends the standard ARP response to the address requiring host via the CPE 3A or 3B. However, the OSP 4 does not perform any special action when the record of the address resolving host is not found in the management table 10.

Sequences of address assignment and address resolution in the network system that has the above configuration are explained next.

### 1. Sequence of Address Assignment

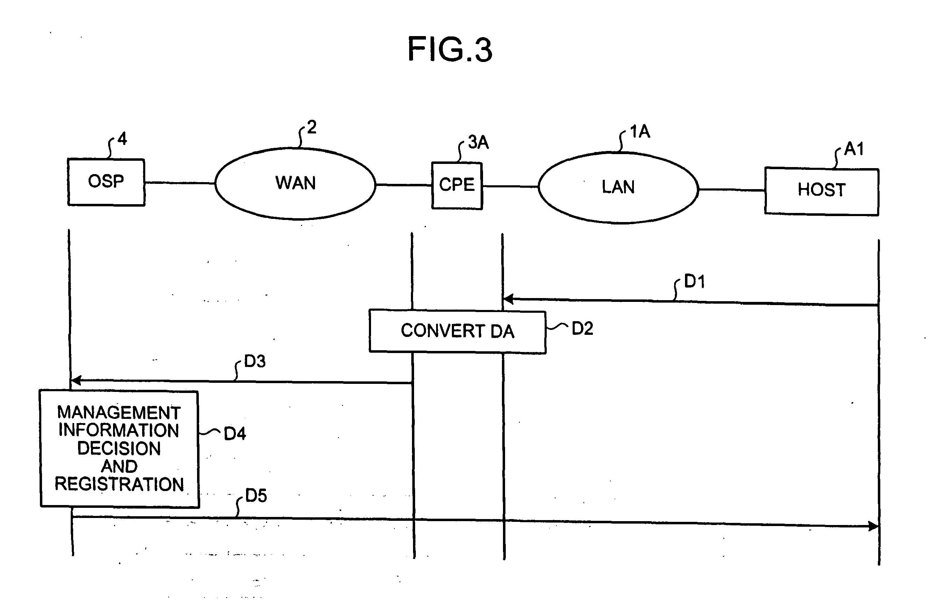

It is assumed that in Fig. 1 the host A1 is newly connected to the LAN 1A. Fig. 3 is a timing chart of management information registration involved in address assignment. When the host A1 broadcasts a standard DHCP (address assignment) request to the LAN 1A (step D1), the CPE 3A converts (overwrites) the DA of the request (step D2) and unicasts the request over the WAN 2 to the OSP 4 (step D3). The OSP 4 determines the management information by allocating the IP address to the host A1, and registers the IP address and the MAC address of the host A1 in the record of the management table 10 whose hostname 11 corresponds to that of the host A1 (step D4). Then, the OSP 4 unicasts the DHCP response including the allocated IP address to the host A1 (step D5). Each step D1 to D5 is also shown in Fig. 1.

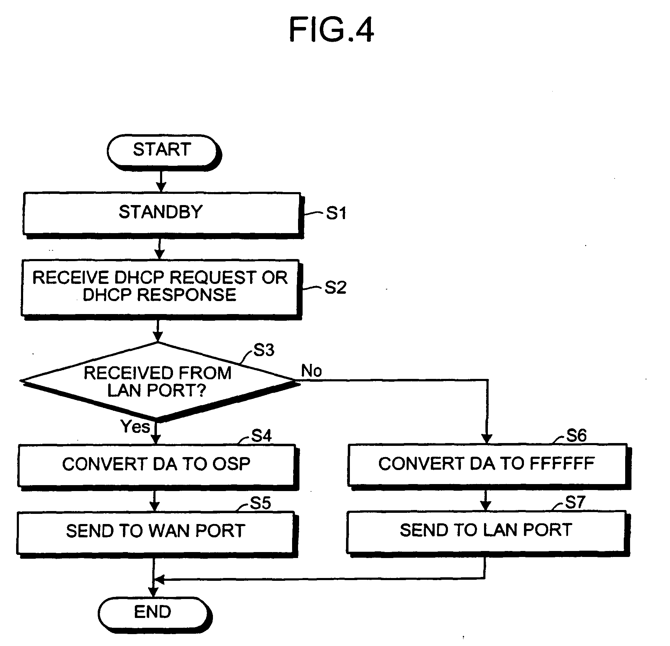

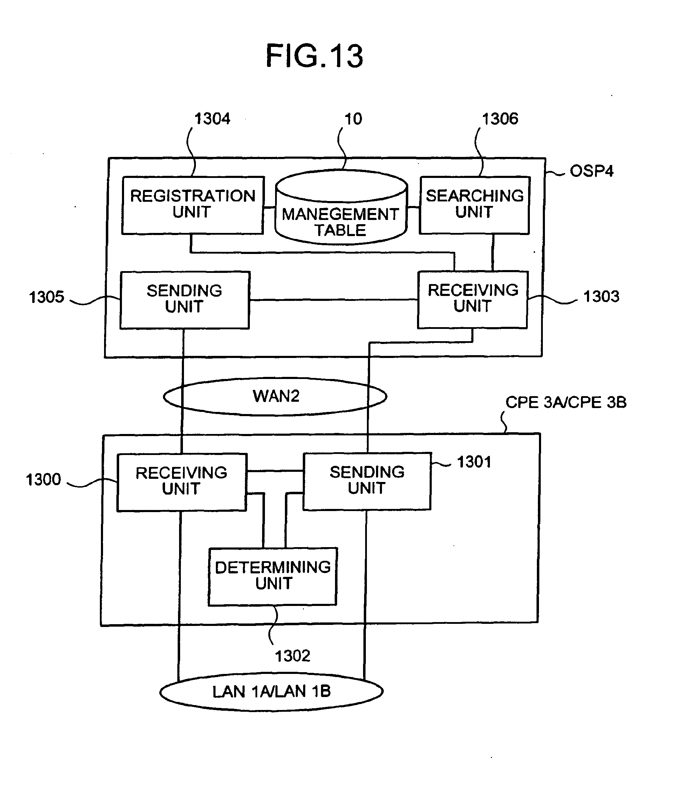

Fig. 4 is a flow chart of processing by the CPEs 3A and 3B in address assignment. Each step in Fig. 4 is explained with reference to Fig. 13, which is a block diagram of the functional configuration of the network system according to the embodiment of the present invention.

The CPEs 3A and 3B are in a standby mode to receive the DHCP request or the DHCP response (step S1). When a receiving unit 1300 of the CPEs 3A and 3B receives the DHCP request or the DHCP response (step S2), the receiving unit 1300 determines whether the receiving port is a LAN port (step S3). When the receiving port is the LAN port (in other words, when the CPEs 3A and 3B have received the DHCP request from the LAN 1A or 1B) (step S3: Yes), a sending unit 1301 of the CPEs 3A and 3B converts (overwrites) the DA of the request to the MAC address of the OSP 4 (in other words, converts the request into the MAC unicast frame to the OSP 4) (step S4). Then, the sending unit 1301 of the CPEs 3A and 3B sends the request to a WAN port (step S5).

On the other hand, when the receiving port is not the LAN port (in other words, when the CPEs 3A and 3B have received the DHCP response from the WAN 2) (step S3: No), the sending unit 1301 of the CPEs 3A and 3B converts (overwrites) the DA of the response to "FFFFFF" (step S6), and sends the response to the LAN port (step S7). After the successive processing is completed by the execution of steps S5 or S7, the CPEs 3A and 3B return to step S1 and enter the standby mode again.

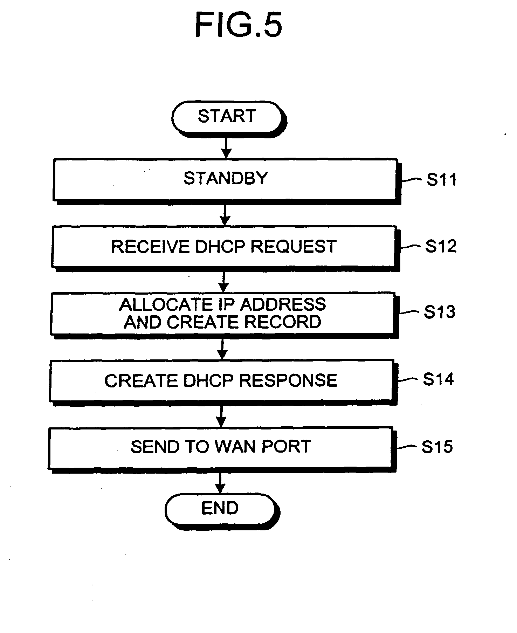

Fig. 5 is a flow chart of processing by the OSP 4 in address assignment. Each step in Fig. 5 is explained with reference to Fig. 13.

The OSP 4 is in a standby mode (step S11). When a receiving unit 1303 of the OSP 4 receives the DHCP request unicast from the CPE 3A or 3B (step S12), a registration unit 1304 of the OSP 4 allocates the IP address to the host that has broadcast the DHCP request in the LAN 1A or 1B, and registers the IP address and the MAC address of the above host in the record of the management table 10 whose hostname 11 corresponds to that of the above host (step S13). Then, a sending unit 1305 of the OSP 4 creates the DHCP response (step S14), and unicasts the response from the WAN port to the above host via the CPE 3A or 3B (step S15). After execution of the successive processing above, the OSP 4 returns to step S11 and enters the standby mode again.

### 2. Sequence of Address Resolution

When the host A3 broadcasts the ARP request (step D6 in Fig. 1) to find the MAC address of the host A1, which has participated in the same LAN 1A according to the sequence explained above (steps D1 to D5 in Figs. 1 and 3), the CPE 3A does not perform any special action, and the host A1 sends the standard ARP response to the host A3 (step D7 in Fig. 1).

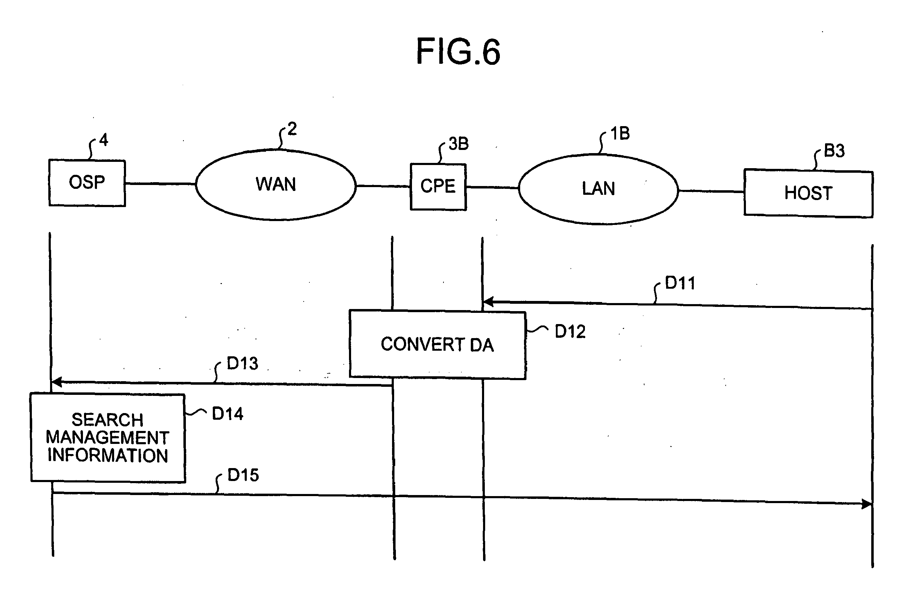

On the other hand, Fig. 6 is a timing chart of management information reference involved in address resolution when the host B3 in the LAN 1B tries to communicate with the host A1 in the different LAN 1A. The host B3 broadcasts the ARP request to the LAN 1B (step D11). The CPE 3B converts (overwrites) the DA of the request, in other words, converts the MAC broadcast frame into the MAC unicast frame (step D12). Then, the CPE 3B asks the OSP 4 to reply the MAC address of the host A1 by unicasting the ARP request to the OSP 4 via the WAN 2 (step D13). The OSP 4 refers to the management table 10 shown in Fig. 2, and searches the MAC address 13 corresponding to the IP address set in the request, namely the MAC address of the host A1 (step D14). Then, the OSP 4 sends the ARP response including the MAC address of the host A1 to the host B3 via the CPE 3B (step D15). Each sequence D11 to D15 is also shown in Fig. 1.

After address resolution according to the sequence explained above, the host B3, which has received the ARP response broadcast in the LAN 1B, initiates host-to-host communication using the MAC unicast frame with the host A1 in the LAN 1A (step D16).

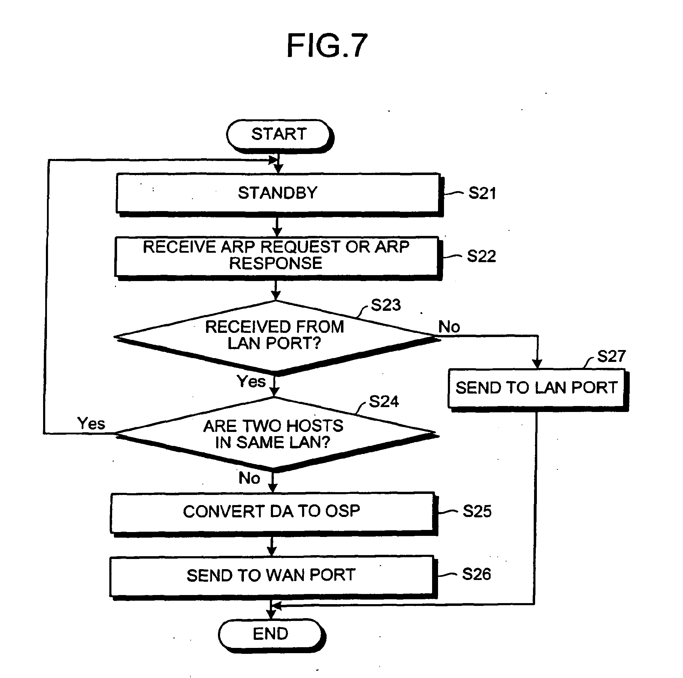

Fig. 7 is a flow chart of processing by CPEs 3A and 3B in address resolution. Each step in Fig. 7 is explained with reference to Fig. 13.

The CPEs 3A and 3B are in a standby mode to receive the ARP request or the ARP response (step S21). When the receiving unit 1300 of the CPEs 3A and 3B receives the ARP request or the ARP response (step S22), the receiving unit 1300 determines whether the receiving port is the LAN port (step S23). When the receiving port is the LAN port (in other words, when the CPE 3A and 3B have received the ARP request from the LAN 1A or 1B) (step S23: Yes), a determining unit 1302 of the CPEs 3A and 3B determines whether the address requiring host and the address resolving host are in the same LAN 1A or 1B (step S24). When the two hosts are not in the same LAN 1A or 1B (in other words, when the MAC address of the address resolving host is unknown to the CPE 3A or 3B) (step S24: Yes), the sending unit 1301 of the CPEs 3A and 3B converts (overwrites) the DA of the request to the MAC address of the OSP 4 (step S25) and sends the request to the WAN port (step S26).

On the other hand, when the receiving port is not the LAN port (in other words, when the CPE 3A and 3B have received the ARP response from the WAN 2) (step S23: No), the sending unit 1301 of the CPEs 3A and 3B sends the response to the LAN port (step S27). When the two hosts are in the same LAN 1A or 1B (step S24: No), the CPE 3A or 3B returns to step S21. After the successive processing is completed by the execution of steps S26 or S27, the CPE 3A and 3B return to step S21 and enter the standby mode again.

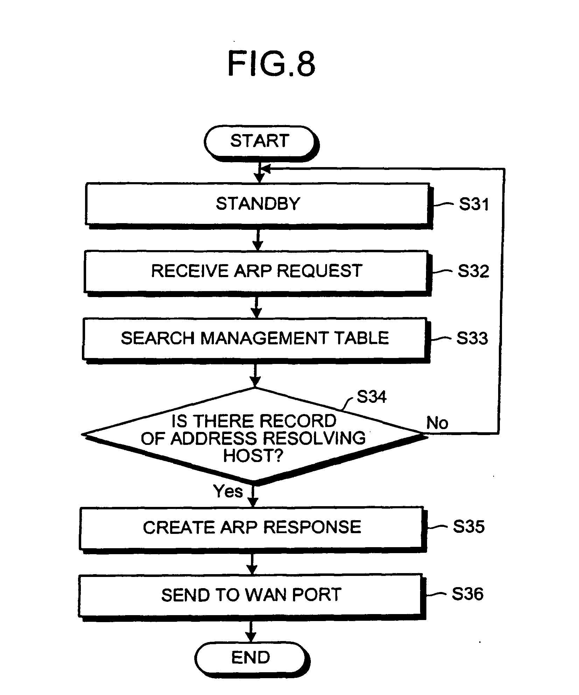

Fig. 8 is a flow chart of processing by the OSP 4 in address resolution. Each step in Fig. 8 is explained with reference to Fig. 13.

The OSP 4 is in a standby mode (step S31). When the receiving unit 1303 of the OSP 4 receives the ARP request unicast from the CPE 3A or 3B (step S32), a searching unit 1306 of the OSP 4 searches the management table 10 shown in Fig. 2 (step S33) and determines whether there is the record of the address resolving host (step S34). When there is not the record (step S34: No), the OSP 4 returns to step S31. When there is the record (step S34: Yes), the sending unit 1305 of the OSP 4 creates the ARP response including the MAC address of the address resolving host (step S35) and sends the response from the WAN port to the address requiring host via the CPE 3A or 3B (step S36). When the successive processing is completed by the execution of step S36, the OSP 4 returns to step S31, and enters the standby mode again.

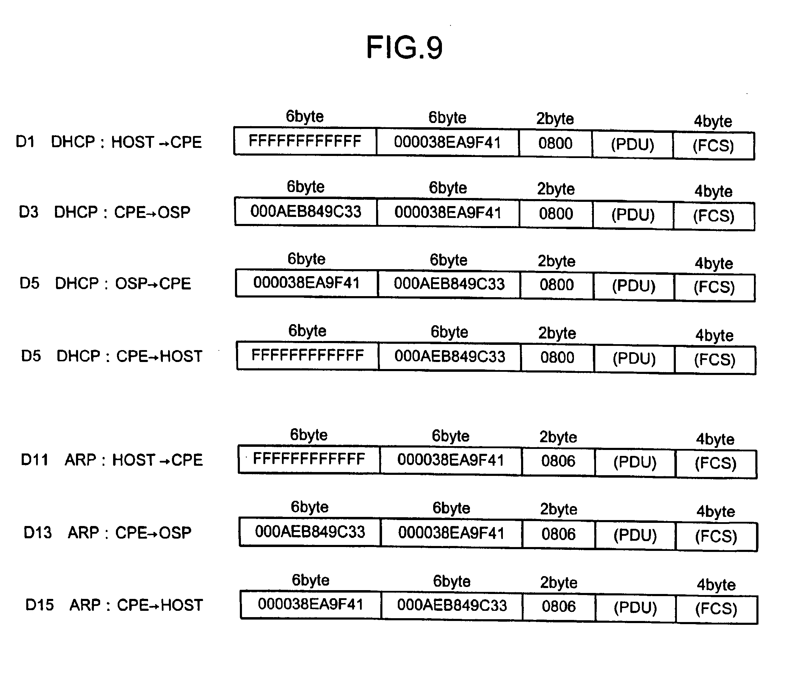

Fig. 9 is a diagram of frame formats used. Each frame format for processes D1, D3, D5, D11, D13, and D15 in Figs. 1, 3, and 6 are shown in Fig. 9. In Fig. 9, "000AEB849C33" is the MAC address of the OSP 4, and "000038EA9F41" is the MAC address of the host A1. As shown in Fig. 9, standard DHCP and ARP sequences are implemented between the hosts A1 to A3 and B1 to B3 and the CPEs 3A and 3B. On the other hand, the sequences between the CPEs 3A and 3B and the OSP 4 are implemented by the MAC unicast frame converted from the MAC broadcast frame, in stead of the MAC broadcast frame which is conventionally used for the sequences.

Accordingly , it is possible to obtain the following two effects;

### 1. Prevention of the ARP Broadcast Storm

In the network system described above, the broadcast frames, which have caused the above-mentioned problems in conventional arts, are classified at the CPEs 3A and 3B into (a) ARP broadcast frames transferred within a single LAN, (b) ARP broadcast frames converted into the MAC unicast frames and transferred over a plurality of LANs, and (c) other broadcast frames transferred similarly to conventional arts (the avove (c) does not become a serious problem because almost all the broadcast frames are ARP broadcast frames). Accordingly, the problem of the saturation of bandwidth by the ARP broadcast frames is resolved, while the same seamlessness as conventional arts being maintained.

### 2. Prevention of Traffic Concentration to the OSP 4

In the network system described above, all the unicast frames from a host in a LAN to another host in a different LAN are transferred without passing through the OSP 4. The frames sent or received by the OSP 4 are only the DHCP request and response used to register the host, and the ARP request and response used to identify the MAC address of the host. As a result, normally more than 99.9% of the frames is switched to a route without passing through the OSP 4. This results in a prevention of traffic concentration to the OSP 4.

Moreover, the OSP 4 can centrally manage the configuration of network system because the addition of new hosts is managed by DHCP server, combined with the DNS server, mounted to the OSP 4. Due to the possession of the management table 10 explained above, the OSP 4 can synchronize the information for switching and the information on network configuration, and can detect the majority of the information necessary for a fault recovery.

Furthermore, an incremental transfer of network management becomes possible, and the outsourcing of network management can be implemented flexibly. For example, when the network management of a private IP routing network that includes a plurality of LANs and a WAN is outsourced, at first only the LANs adjoining the WAN are reconstructed according to the embodiment. At this stage, only the network management for the WAN and the LAN adjoining the WAN can be outsourced. Later, the network management for other LANs connected to the above LANs by IP routers can be outsourced by replacing the IP routers with switch devices.

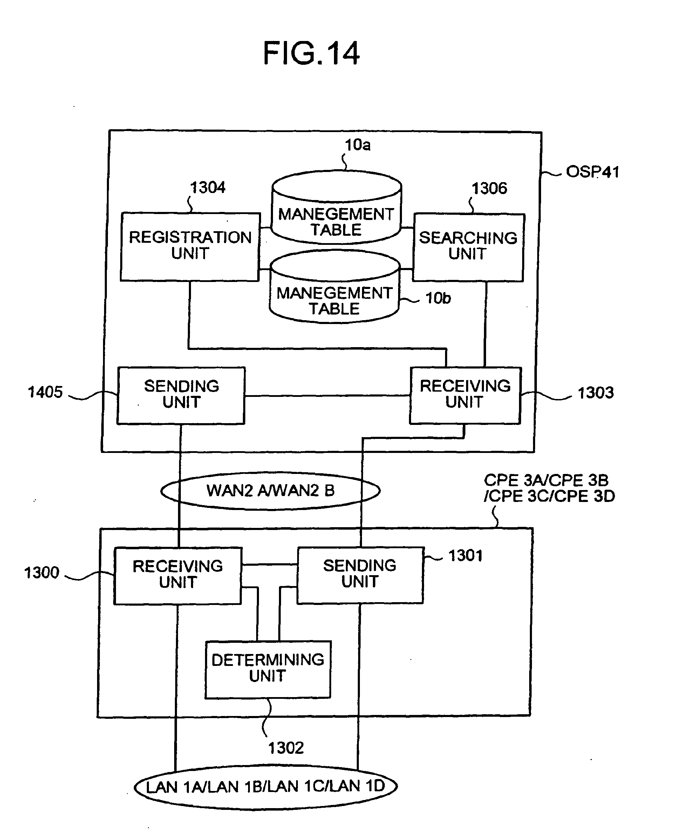

An example is explained next with reference to Fig. 14, which is a block diagram of the functional configuration of the network system.

In principle, each physical or logical interface of an IP host must be assigned a unique IP address. However, when the OSP 4 accommodates a plurality of IP networks of different managing bodies, there can be a plurality of interfaces that are assigned an identical IP address.

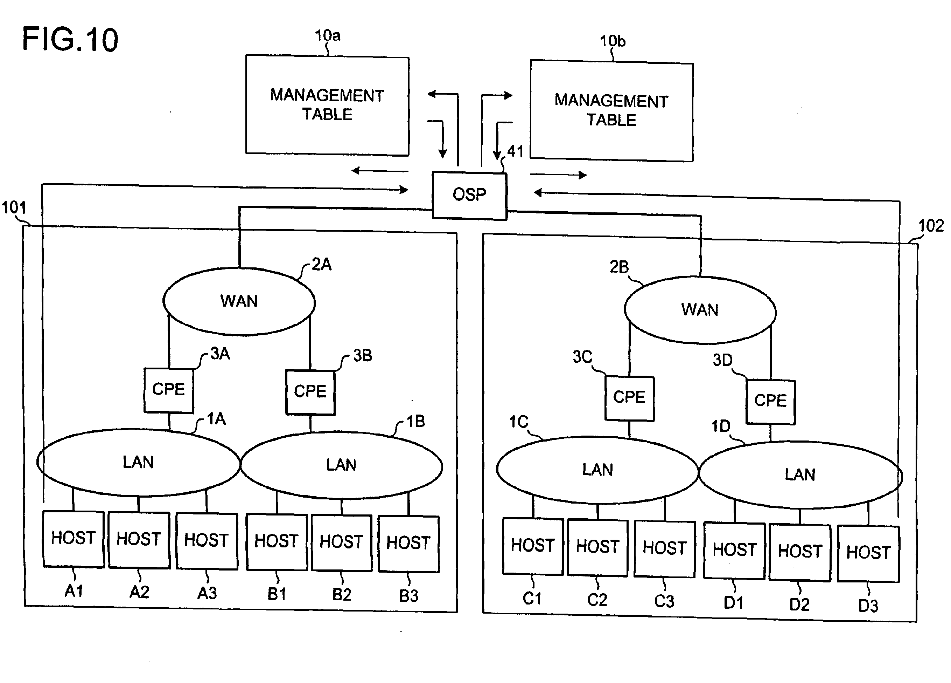

Fig. 10 is a diagram for explaining the example. As shown in Fig. 10, two private networks 101 and 102 are connected to an OSP 41. In the network 101, LANs 1A and 1B are respectively connected to a WAN 2A via CPEs 3A and 3B. In the network 102, LANs 1C and 1D are respectively connected to a WAN 2B via CPEs 3C and 3D. The network 101 includes a plurality of hosts A1 to A3 and B1 to B3. The network 102 includes a plurality of hosts C1 to C3 and D1 to D3.

If the OSP 4 is introduced as-is to the network shown in Fig. 10, the OSP 4 cannot identify which host should receive the ARP response because there are two hosts assigned an identical IP address in the two networks 101 and 102. As a result, the OSP 4 cannot send the ARP response appropriately, in other words, the OSP 4 can disadvantageously send the response to an irrelevant host as well as a relevant host.

For this reason, the OSP 41, which includes a plurality of physical or logical interfaces for connecting the networks 101 and 102 respectively to the OSP 41, manages address spaces of the network 101 and 102 respectively and associates each address space with the number of each interface. The OSP 41 includes a plurality of management tables 10a and 10b (shown in Figs. 10 and 14) that correspond to the networks 101 and 102 respectively, and store the addresses of hosts A1 to B3 and C1 to D3 separately. A sending unit 1405 of the OSP 41 (shown in Fig. 14) sends a response (such as the DHCP response and the ARP response) to a certain IP address only from one interface that has received a request (such as the DHCP request and the ARP request), even if there are two hosts of the address in the networks 101 and 102. In other words, the OSP 41 sends the response only to one host, regardless of the destination address of the response.

Accordingly, the OSP 41 can accommodate a plurality of networks, in other words, can send the ARP response only to the relevant host that has sent the ARP request. Furthermore, the cost of outsourcing reduces because the facilities can be consolidated without increasing the number of the OSP 41 and because services for a plurality of enterprises are centrally performed by the OSP 41.

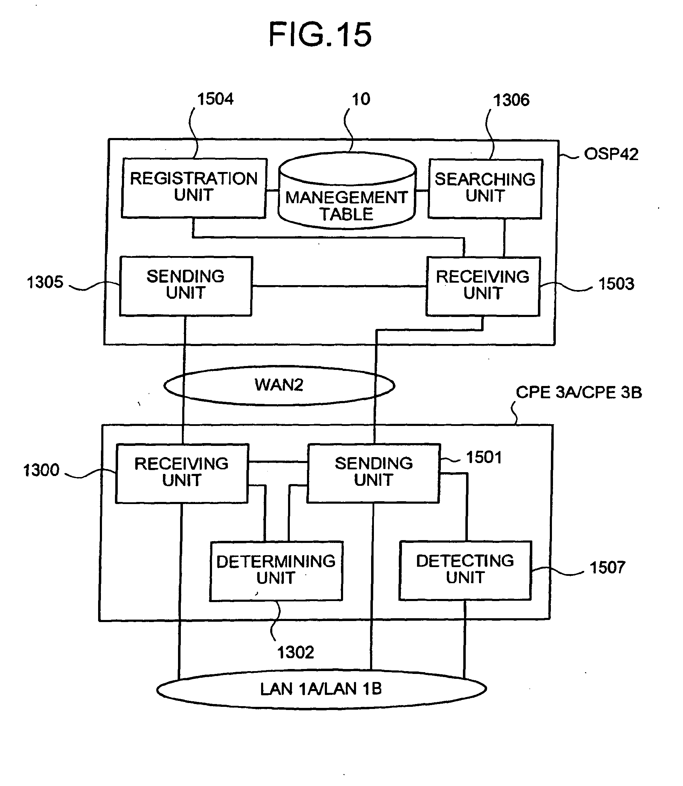

The present invention is explained next with reference to Fig. 15, which is a block diagram of the functional configuration of the network system according to the present invention.

The following example relates to the processing when a host is disconnected or is moved from one LAN to another LAN. The disposition of the hosts A1 to A3 and B1 to B3 in the LANs 1A and 1B shown in Fig. 1 can change due to a failure, a circuit disconnection, a movement, and the like. Whenever there is a change of the disposition, an OSP 42 (shown in Fig. 15) manages an incorporation of the changes in the management table 10.

### 1. According to the present invention, when the host becomes disconnected

As shown in Fig. 15, the HCPE 3A/CPE3B has a detecting unit 1507 that detects disconnection of the hosts A1 to A3 and B1 to B3. The hosts A1 to A3 and B1 to B3 can be connected to the LAN 1A or 1B directly or indirectly (via a cascade bridge, for example). If there is the host connected indirectly to the LAN 1A or 1B, the connection status of the host is previously set in the CPE 3A or 3B. The detecting unit 1507 of the CPEs 3A and 3B periodically sends (1) a pulse or the like to the directly-connected hosts, as well as (2) an activity confirmation signal to the indirectly-connected hosts, to detect the connection status of the hosts A1 to A3 and B1 to B3. When the detecting unit 1507 of the CPE 3A detects the disconnection of the host A1, for example, a sending unit 1501 of the CPE 3A sends to the OSP 42 a notice that instructs the OSP 42 to delete the management information of the host A1 in the management table 10 (hereinafter, "deregistration notice"). When a receiving unit 1503 of the OSP 42 receives the deregistration notice, a registration unit 1504 of the OSP 42 deletes the IP address 12 and the MAC address 13 of the host A1 in the management table 10 shown in Fig. 2. As a result, the OSP 42 can continuously maintain the information on the disposition of the hosts A1 to A3 and B1 to B3 in the most up-to-date status.

### 2. Not part of the present invention, when the host duplicates the sending of DHCP request

It is assumed that the MAC address 13 of the host A1 is already registered in the management table 10 of the OSP 42. When the host A1 is moved from the LAN 1A to the LAN 1B, the deregistration processing of the host A1 can be not performed correctly for some reason, such as a failure, a movement, and the like. As a result, the OSP 42 receives the DHCP request with the MAC address that is already registered in the management table 10, when the host A1 sends the DHCP request to the OSP 42 via the LAN 1B. Upon receiving the DHCP request, a registration unit 1504 (shown in Fig. 15) of the OSP 42 deletes the previously registered management information of the host A1, creates new management information of the host A1 as a new host on the LAN 1B, and sends the DHCP response to the CPE 3B.

According to the invention, even if the deregistration is not excecuted correctly, unnecessary old management information is deleted; and new management information that corresponds to the new disposition is created, registered, and managed.

The network address assignment method and the network address resolution method explained above are executed on computers such as personal computers, workstations, and the like that use a computer program that is prepared in advance of use. This computer program is recorded on recordable media that can be read by computers, such as hard disks, flexible disks, CD-ROMs, MOs, DVDs, and the like. It is also acceptable for the computer program to be a transmittable medium that is distributed via a network such as the Internet and the like.

A network bridge device, and a method for the network bridge device according to the present invention have the effects of centrally controlling an entire network system comprised of a plurality of local area networks and a wide area network, and facilitating an outsourcing of network management.

## Claims

1. A network bridge device (3A;3B) that is connected to a local area network (1A;1B) and a wide area network (2), wherein the local area network (1A;1B) includes a plurality of hosts (A1 to A3; B1 to B3) and the wide area network (2) is connected to a network management apparatus (4) that holds management information of the hosts (A1 to A3; B1 to B3),
wherein the network bridge device (3A;3B) comprises a request receiving unit that receives an address assignment request that is broadcast by a host in the local area network (1A;1B) and a request sending unit that unicasts the address assignment request to the wide area network (2),
**characterized in that,**
the network bridge device (3A;3B) further comprises a disconnection detection unit that detects disconnection of the host from the local area network (1A;1B) and a notifying unit that notifies the network management apparatus (4) to delete management information of the host when the disconnection is detected.

2. The network bridge device according to claim 1,
**characterized in that,**
the request sending unit unicasts the address assignment request to the wide area network (2) by overwriting a destination address of the address assignment request to an address of the network management apparatus (4).

3. The network bridge device according to claim 1,
**characterized in that,**
the network bridge device (3A;3B) further comprises a response receiving unit that receives a response to the address assignment request from the network management apparatus (4) that unicasts the response and a response sending unit that broadcasts the response in the local area network (1A;1B).

4. A method for a network bridge device (3A; 3B) that is connected to a local area network (1A; 1B) and a wide area network, wherein the local area network (1A; 1B) includes a plurality of hosts (A1 to A3; B1 to B3) and the wide area network is connected to a network management apparatus (4) that holds management information of the hosts,
wherein the method comprises the steps of receiving an address assignment request that is broadcast by a host in the local area network (1A; 1B) and unicasting the address assignment request to the wide area network (2),
**characterized in that,**
the method further comprises the steps of detecting disconnection of the host from the local area network (1A; 1B) and notifying the network management apparatus (4) to delete management information of the host when the disconnection is detected.

5. The method according to claim 4,
**characterized in that,**
at the unicasting, a destination address of the address assignment request is overwritten to an address of the network management apparatus (4).

6. The method according to claim 4,
**characterized in that,**
the method further comprises the steps of receiving a response to the address assignment request from the network management apparatus (4) that unicasts the response and broadcasting the response in the local area network (1A; 1B).

## Patentansprüche

1. Netzwerk-Überbrückungsvorrichtung (3A; 3B), die mit einem lokalen Bereichs- bzw. LAN-Netzwerk (1A; 1B) und einem Weitbereichs- bzw. WAN-Netzwerk (2) verbunden ist, wobei das LAN-Netzwerk (1A; 1B) eine Vielzahl von Hosts (A1 bis A3; B1 bis B3) aufweist und wobei das WAN-Netzwerk (2) mit einer Netzwerk-Verwaltungsvorrichtung (4) verbunden ist, in der eine Verwaltungsinformation der Hosts (A1 bis A3; B1 bis B3) enthalten ist,
wobei die Netzwerk-Überbrückungsrichtung (3A; 3B) eine Anforderungs-Empfangseinheit, die eine Adressenzuweisungs-Anforderung empfängt, welche von einem Host in dem LAN-Netzwerk (1A; 1B) bei einer Rundsendung ausgesendet ist, und eine Anforderungs-Sendeeinheit umfasst, die die Adressenzuweisungs-Anforderung an das WAN-Netzwerk (2) bei einer Punkt-zu-Punkt-Verbindung aussendet,
**dadurch gekennzeichnet, dass** die Netzwerk-Überbrückungsvorrichtung (3A; 3B) ferner eine Trennungs-Detektiereinheit, die eine Trennung des Hosts von dem LAN-Netzwerk (1A; 1B) detektiert, und eine Meldeeinheit umfasst, die der Netzwerk-Verwaltungsvorrichtung (4) meldet, dass die Verwaltungsinformation des Hosts zu löschen ist, wenn die Trennung ermittelt ist.

2. Netzwerk-Überbrückungsvorrichtung nach Anspruch 1,
**dadurch gekennzeichnet, dass** die Anforderungs-Sendeeinheit die Adressenzuweisungs-Anforderung an das WAN-Netzwerk (2) durch Schreiben einer Zieladresse der Adressenzuweisungs-Anforderung über einer Adresse der Netzwerk-Verwaltungsvorrichtung (4) bei einer Punkt-zu-Punkt-Verbindung aussendet.

3. Netzwerk-Überbrückungsvorrichtung nach Anspruch 1,
**dadurch gekennzeichnet, dass** die Netzwerk-Überbrückungsvorrichtung (3A; 3B) ferner eine Antwort-Empfangseinheit, die eine Antwort auf die Adressenzuweisungs-Anforderung von der Netzwerk-Verwaltungsvorrichtung (4) erhält, welche die Antwort bei einer Punkt-zu-Punkt-Verbindung aussendet, und eine Antwort-Sendeeinheit umfasst, welche die Antwort in dem LAN-Netzwerk (1A; 1B) bei einer Rundsendung aussendet.

4. Verfahren fiir eine Netzwerk-Überbrückungsvorrichtung (3A; 3B), die mit einem lokalen Bereichs- bzw. LAN-Netzwerk (1A; 1B) und mit einem Weitbereichs- bzw. WAN-Netzwerk verbunden ist,
wobei das LAN-Netzwerk (1A; 1B) eine Mehrzahl von Hosts (A 1 bis A3; B 1 bis B3) aufweist,
wobei das WAN-Netzwerk mit einer Netzwerk-Verwaltungsvorrichtung (4) verbunden ist, in der eine Verwaltungsinformation bezüglich der Hosts bereitgehalten wird,
und wobei das Verfahren die Schritte des Empfangens einer Adressenzuweisungs-Anforderung, die von einem Host in dem LAN-Netzwerk (1A; 1B) bei einer Rundsendung ausgesendet wird, und das Aussendens der Adressen-Zuweisungsanforderung an das WAN-Netzwerk (2) bei einer Punkt-zu-Punkt-Verbindung umfasst,
**dadurch gekennzeichnet, dass** das Verfahren ferner die Schritte des Detektierens einer Trennung des Hosts von dem LAN-Netzwerk (1A; 1B) und des Meldens an die Netzwerk-Verwaltungsvorrichtung (4) zum Löschen der Verwaltungsinformation des Hosts umfasst, wenn die Trennung ermittelt wird.

5. Verfahren nach Anspruch 4, **dadurch gekennzeichnet, dass** beim Aussenden bei einer Punkt-zu-Punkt-Verbindung eine Zieladresse der Adressenzuweisungs-Anforderung über eine Adresse der Netzwerk-Verwaltungsvorrichtung (4) geschrieben wird.

6. Verfahren nach Anspruch 4, **dadurch gekennzeichnet, dass** das Verfahren ferner die Schritte des Empfangens einer Antwort auf die Adressenzuweisungs-Anforderung von der Netzwerk-Verwaltungsvorrichtung (4), welche die Antwort bei einer Punkt-zu-Punkt-Verbindung aussendet, und des Aussendens der Antwort in dem LAN-Netzwerk (1A; 1B) bei einer Rundsendung umfasst.

## Revendications

1. Dispositif de pont de réseau (3A ; 3B) qui est connecté à un réseau local (1A; 1B) et à un réseau étendu (2), où le réseau local (1A, 1 B) comprend une pluralité d'hôtes (A1 à A3 ; B1 à B3) et le réseau étendu (2) est connecté à un dispositif de gestion de réseau (4) qui conserve des informations de gestion des hôtes (A1 à A3 ; B1 à B3),
où le dispositif de pont de réseau (3A ; 3B) comprend une unité de réception de demande qui reçoit une demande d'affectation d'adresse qui est diffusée par un hôte dans le réseau local (1A; 1 B) et une unité d'envoi de demande qui envoie à un destinataire unique la demande d'affectation d'adresse au réseau étendu (2),
**caractérisé en ce que**,
le dispositif de pont de réseau (3A ; 3B) comprend en outre une unité de détection de déconnexion qui détecte la déconnexion de l'hôte du réseau local (1A ; 1B) et une unité de notification qui notifie au dispositif de gestion de réseau (4) d'effacer les informations de gestion de l'hôte lorsque la déconnexion est détectée.

2. Dispositif de pont de réseau selon la revendication 1, **caractérisé en ce que**,
l'unité de demande d'envoi envoie à un destinataire unique la demande d'affectation d'adresse au réseau étendu (2) en superposant en écriture une adresse de destination de la demande d'affection d'adresse pour une adresse du dispositif de gestion de réseau (4).

3. Dispositif de pont de réseau selon la revendication 1,
**caractérisé en ce que**,
le dispositif de pont de réseau (3A ; 3B) comprend en outre une unité de réception de réponse qui reçoit une réponse à la demande d'affectation d'adresse provenant du dispositif de gestion de réseau (4) qui envoie à un destinataire unique la réponse et une unité d'envoi de réponse qui diffuse la réponse dans le réseau local (1A ; 1B).

4. Procédé pour un dispositif de pont de réseau (3A ; 3B) qui est connecté à un réseau local (1A; 1B) et à un réseau étendu, où le réseau local (1A ; 1B) comprend une pluralité d'hôtes (A1 à A3 ; B1 à B3) et le réseau étendu est connecté à un dispositif de gestion de réseau (4) qui conserve des informations de gestion des hôtes,
où le procédé comprend les étapes consistant à recevoir une demande d'affectation d'adresse qui est diffusée par un hôte dans le réseau local (1A; 1B) et à envoyer à un destinataire unique la demande d'affectation d'adresse au réseau étendu (2),
**caractérisé en ce que**,
le procédé comprend en outre les étapes consistant à détecter une déconnexion de l'hôte du réseau local (1A; 1B) et à notifier au dispositif de gestion de réseau (4) d'effacer les informations de gestion de l'hôte lorsque la déconnexion est détectée.

5. Procédé selon la revendication 4,
**caractérisé en ce que**,
lors de l'envoi à un destinataire unique, une adresse de destination de la demande d'affectation d'adresse fait l'objet d'une superposition en écriture pour une adresse du dispositif de gestion de réseau (4).

6. Procédé selon la revendication 4,
**caractérisé en ce que**,
le procédé comprend en outre les étapes consistant à recevoir une réponse à la demande d'affection d'adresse provenant du dispositif de gestion de réseau (4) qui envoie à un destinataire unique la réponse et à diffuser la réponse dans le réseau local (1A ; 1B).
